# EUROPEAN PATENT APPLICATION

(11) **EP 1 179 904 A1**
(43) Date of publication of application: **13.02.2002**
(21) Application number: 01914174.6
(22) Date of filing: 19.03.2001
(51) Int. Cl.: H04J 11/00, H04J 13/00

(54) **RADIO COMMUNICATION APPARATUS AND RADIO COMMUNICATION METHOD**

(30) Priority: 17.03.2000 JP 2000076904; 10.10.2000 JP 2000308884
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP); SUMASU, Atsushi, Yokosuka-shi, Kanagawa 239-0833 (JP)
(74) Representative: Grünecker, Kinkeldey, Stockmair & Schwanhäusser Anwaltssozietät
(86) International application number: JP0102144
(87) International publication number: WO0169826

(57) **Abstract**

A particular data item is arranged two-dimensionally, distributed both on the frequency axis and on the time axis, by spreading in the time axis direction by means of time domain spreaders 102-1 through 102-N data converted to parallel form by an S/P section 101, and rearranging post-spreading chips on the frequency axis by shifting them step-wise in the carrier frequency upward or downward direction by means of a rearranging section 103.

## Description

### Technical Field

The present invention relates to a radio communication apparatus and radio communication method for use in a digital communication system, and more particularly to a radio communication apparatus and radio communication method that perform radio communications with a combination of a multicarrier modulation method such as the OFDM (Orthogonal Frequency Division Multiplexing) modulation method, and a CDMA (Code Division Multiple Access) method.

### Background Art

Nowadays, in radio communications, and especially in mobile communications, various kinds of information such as images and data are transmitted as well as voice. Henceforth, demand for the transmission of various kinds of content is expected to continue to grow, further increasing the necessity of highly reliable, high-speed transmission. However, when high-speed transmission is carried out in mobile communications, the effect of delayed waves due to multipath propagation can no longer be ignored, and transmission characteristics degrade due to frequency selective fading.

Multicarrier modulation methods such as the OFDM modulation method are drawing attention as one kind of technology for combating frequency selective fading. A multicarrier modulation method is a technology for effectively performing high-speed transmission by transmitting data using a plurality of carriers (subcarriers) whose speed is suppressed to a level at which frequency selective fading does not occur. With the OFDM modulation method, in particular, the subcarriers on which data is placed are mutually orthogonal, making this the multicarrier modulation method offering the highest spectral efficiency. Moreover, the OFDM modulation method can be implemented with a comparatively simple hardware configuration. For these reasons, various studies are being undertaken concerning the OFDM modulation method as a frequency selective fading countermeasure.

Also, a spread spectrum method is another technology for combating frequency selective fading. A spread spectrum method is a technology that improves interference immunity by spreading a signal along the frequency axis by means of a spreading code called a PN code to obtain spreading gain. Spread spectrum methods include a direct spreading method and a frequency hopping method. Of these, a CDMA (Code Division Multiple Access ) method using direct spreading has been decided on for use in the next-generation mobile communication system IMT-2000.

OFDM-CDMA methods combining the OFDM modulation method and CDMA method have recently been a focus of attention. OFDM-CDMA methods are broadly divided into time domain spreading and frequency domain spreading. Time domain spreading and frequency domain spreading methods are described below.

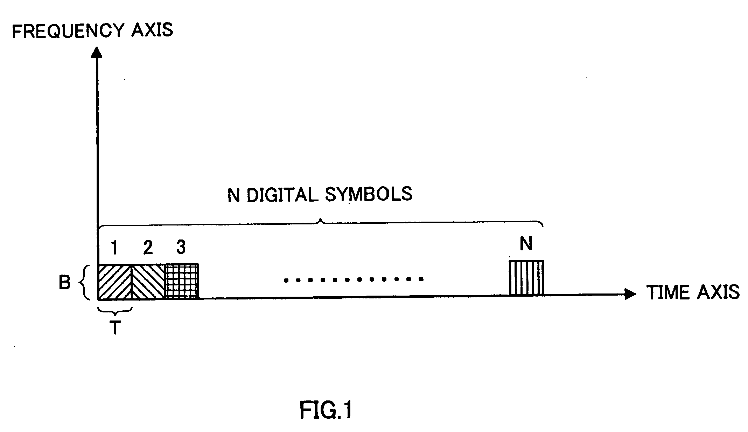

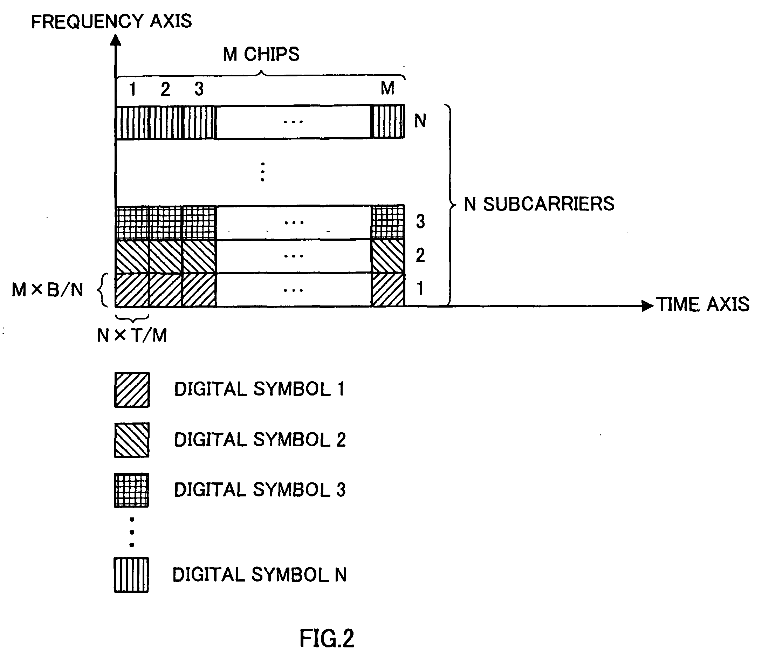

First, time domain spreading will be described. FIG.1 is a diagram showing the state of digital symbols before modulation processing, and FIG.2 is a diagram showing the chip arrangement after modulation processing using the time domain spreading method. With time domain spreading, N digital symbols (serial data stream) (FIG.1) are converted to parallel data streams, and then each digital symbol is multiplied by a spreading code with spreading factor M. After spreading, chips undergo sequential inverse fast Fourier transform (IFFT) processing one chip at a time with N chips in parallel. As a result, M OFDM symbols with N subcarriers are generated. That is, with time domain spreading, after spreading, chips are arranged in time series on the respective subcarriers (FIG.2).

Assuming that one digital symbol prior to modulation processing uses radio resources of time width T and frequency band width B (FIG.1), after modulation processing, one chip will use time width N×T/M and frequency band width M×B/N. Therefore, the area occupied by each digital symbol in the time-frequency domain is M×T×B, M times the area occupied by one digital symbol prior to modulation processing.

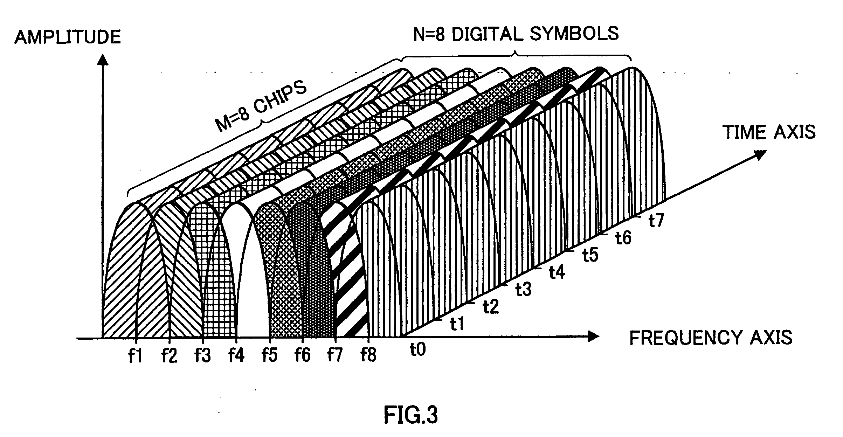

If, for example, number of digital symbols N = 8, and spreading factor M = 8, the OFDM symbol signal pattern generated by the time domain spreading method is as shown in FIG.3. As shown in this diagram, with the time domain spreading method, eight digital symbols differentiated by black-and-white shading on the frequency axis are assigned sequentially, one chip at a time, each to a different one of subcarriers f1 through f8, and eight OFDM symbols are generated at t0 through t7.

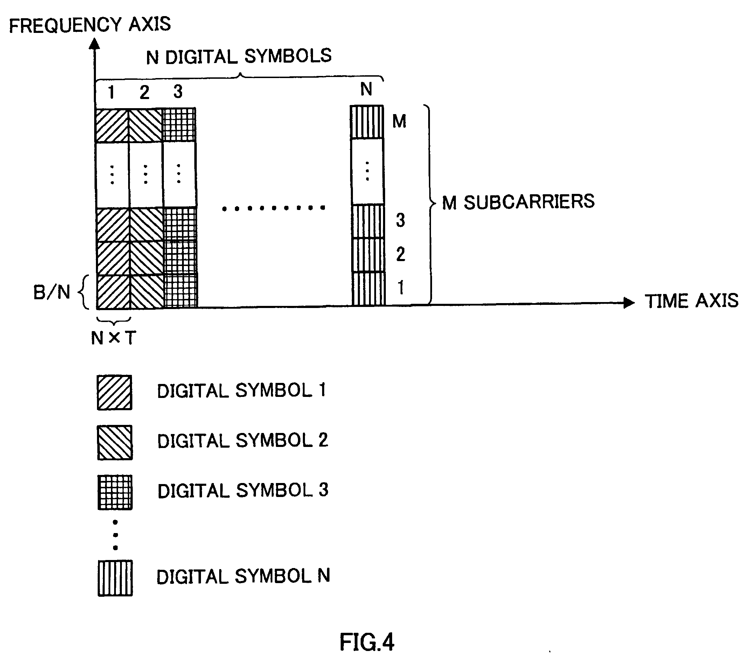

Next, frequency domain spreading will be described. FIG.4 is a diagram showing the arrangement of chips after modulation processing using the frequency domain spreading method. With frequency domain spreading, a serial data stream comprising N digital symbols (serial data stream) (FIG. 1) are multiplied, one symbol at a time, by a spreading code with spreading factor M. After spreading, chips undergo sequential IFFT processing one symbol at a time with M chips in parallel. As a result, N OFDM symbols with M subcarriers are generated. That is, with frequency domain spreading, after spreading, chips are arranged along the frequency axis at their respective times (FIG.4). In other words, after spreading, chips are arranged on different subcarriers.

Assuming that one digital symbol prior to modulation processing uses radio resources of time width T and frequency band width B (FIG.1), as described above, after modulation processing, one chip will use time width N×T and frequency band width B/N. Therefore, the area occupied by each digital symbol in the time-frequency domain is M×T×B, as with time domain spreading, M times the area occupied by one digital symbol prior to modulation processing.

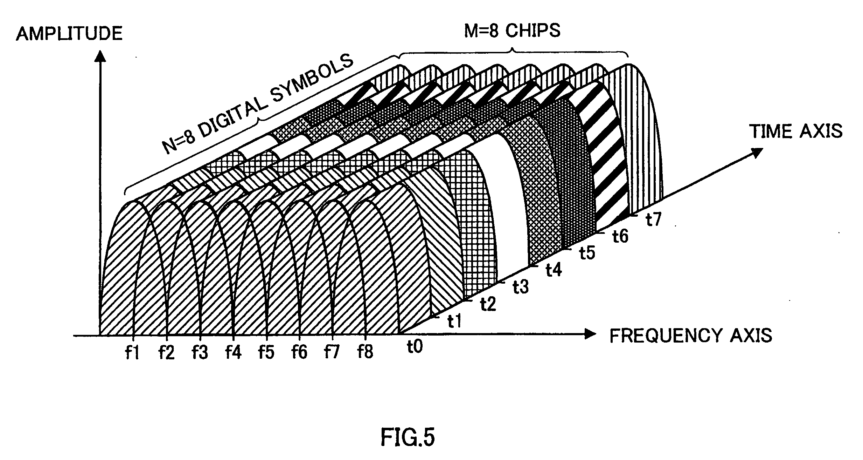

If, for example, number of digital symbols N = 8, and spreading factor M = 8, the OFDM symbol signal pattern generated by the frequency domain spreading method is as shown in FIG.5. As shown in this diagram, with the frequency domain spreading method, eight OFDM symbols are generated sequentially at t0 through t7 for eight digital symbols differentiated by black-and-white shading on the time axis. At this time, the eight chips for each digital symbol are assigned each to a different one of subcarriers f1 through f8.

By using a time domain spreading method or frequency domain spreading method as described above, it is possible to achieve efficient reuse and obtain a statistical multiplexing effect. Moreover, faster data transmission can be achieved than with single-carrier CDMA. Reuse is the ability to use the same frequency in an adjacent cell. A statistical multiplexing effect is the ability to accommodate more user signals when data presence occurs randomly according to the user than in the case of continuous transmission according to a decrease in energy in an interval in which there is no reciprocal transmission.

However, with the time domain spreading method, if a particular digital symbol is considered, since a plurality of post-spreading chips are arranged in a time series at the same frequency (FIG.2 and FIG.3), multipath separation is possible and a path diversity effect is obtained, but a frequency diversity effect is not obtained. Therefore, if transmission power control is imperfect due to radio channel conditions, transmission characteristics degrade precipitously. Also, even when transmission power control is performed perfectly, the resulting increase in the transmission power causes problems such as greater battery consumption at a mobile station apparatus, larger amplifier size, and greater interference with other cells.

Also, with the frequency domain spreading method, if a particular digital symbol is considered, since a plurality of post-spreading chips are arranged on different subcarriers at the same time (FIG.4 and FIG.5), a frequency diversity effect is obtained, but path separation is not possible and a path diversity effect is not obtained. As RAKE combination can therefore not be used, it is not possible to reduce multipath distortion. Also, if a plurality of user signals are code division multiplexed on each subcarrier, even if orthogonal codes are used in spreading processing, orthogonality cannot be maintained because of the influence of multipath distortion, and therefore the level of code division multiplexing is limited. Moreover, the influence of signal extraction timing variations in a Fourier transform is increased.

### Disclosure of Invention

It is an object of the present invention to provide a radio communication apparatus and radio communication method that enable both a frequency diversity effect and a path diversity effect to be obtained, and transmission characteristics to be improved compared with heretofore, in radio communications in which a multicarrier modulation method and CDMA method are combined.

In order to achieve the above object, in the present invention, in radio communications in which a multicarrier modulation method and CDMA method are combined, a plurality of chips after spreading of a particular digital symbol that are conventionally arranged one-dimensionally, aligned either on the frequency axis or on the time axis, are arranged two-dimensionally, distributed both on the frequency axis and on the time axis. By this means, it is possible to obtain both a frequency diversity effect and a path diversity effect in radio communications in which a multicarrier modulation method and CDMA method are combined.

### Brief Description of Drawings

FIG.1 is a diagram showing the state of digital symbols before modulation processing;
FIG.2 is a diagram showing the chip arrangement with a conventional time domain spreading method;
FIG.3 is a diagram of an OFDM symbol signal pattern with a conventional time domain spreading method;
FIG. 4 is a diagram showing the chip arrangement with a conventional frequency domain spreading method;
FIG.5 is a diagram of an OFDM symbol signal pattern with a conventional frequency domain spreading method;
FIG.6 is a block diagram showing the configuration of the transmitting side in a radio communication apparatus according to Embodiment 1 of the present invention;
FIG.7 is a block diagram showing the configuration of the receiving side in a radio communication apparatus according to Embodiment 1 of the present invention;
FIG.8 is a diagram showing the chip arrangement of a radio communication apparatus according to Embodiment 1 of the present invention;
FIG.9 is a diagram of an OFDM symbol signal pattern transmitted from a radio communication apparatus . according to Embodiment 1 of the present invention;
FIG. 10 is a block diagram showing the configuration of the transmitting side in a radio communication apparatus according to Embodiment 2 of the present invention;
FIG. 11 is a block diagram showing the configuration of the receiving side in a radio communication apparatus according to Embodiment 2 of the present invention;
FIG.12 is a diagram showing the chip arrangement of a radio communication apparatus according to Embodiment 2 of the present invention;
FIG.13 is a diagram of an OFDM symbol signal pattern transmitted from a radio communication apparatus according to Embodiment 2 of the present invention;
FIG.14 is a diagram showing the chip arrangement of a radio communication apparatus according to Embodiment 2 of the present invention;
FIG. 15 is a diagram of an OFDM symbol signal pattern transmitted from a radio communication apparatus according to Embodiment 2 of the present invention;
FIG.16 is a diagram of an OFDM symbol signal pattern transmitted from a radio communication apparatus according to Embodiment 2 of the present invention;
FIG.17 is a block diagram showing the configuration of the transmitting side in a radio communication apparatus according to Embodiment 3 of the present invention;
FIG.18 is a block diagram showing the configuration of the receiving side in a radio communication apparatus according to Embodiment 3 of the present invention;
FIG. 19 is a diagram of an OFDM symbol signal pattern transmitted from a radio communication apparatus according to Embodiment 3 of the present invention;
FIG.20 is a block diagram showing the configuration of the transmitting side in a radio communication apparatus according to Embodiment 4 of the present invention;
FIG.21 is a block diagram showing the configuration of the receiving side in a radio communication apparatus according to Embodiment 4 of the present invention;
FIG.22 is a diagram of an OFDM symbol signal pattern transmitted from a radio communication apparatus according to Embodiment 4 of the present invention;
FIG.23 is a block diagram showing the configuration of a radio communication apparatus according to Embodiment 5 of the present invention; and
FIG.24 is a block diagram showing the configuration of a radio communication apparatus according to Embodiment 6 of the present invention.

### Best Mode for Carrying out the Invention

With reference now to the accompanying drawings, embodiments of the present invention will be explained in detail below. The following descriptions take the OFDM modulation method as an example of a multicarrier modulation method. That is, a case is described in which the transmitted multicarrier signal is OFDM symbol.

### (Embodiment 1)

In this embodiment, a particular data item is arranged two-dimensionally, distributed both on the frequency axis and on the time axis, by spreading data on the time axis, and shifting each post-spreading chip step-wise in the carrier frequency upward or downward direction on the frequency axis, changing the arrangement.

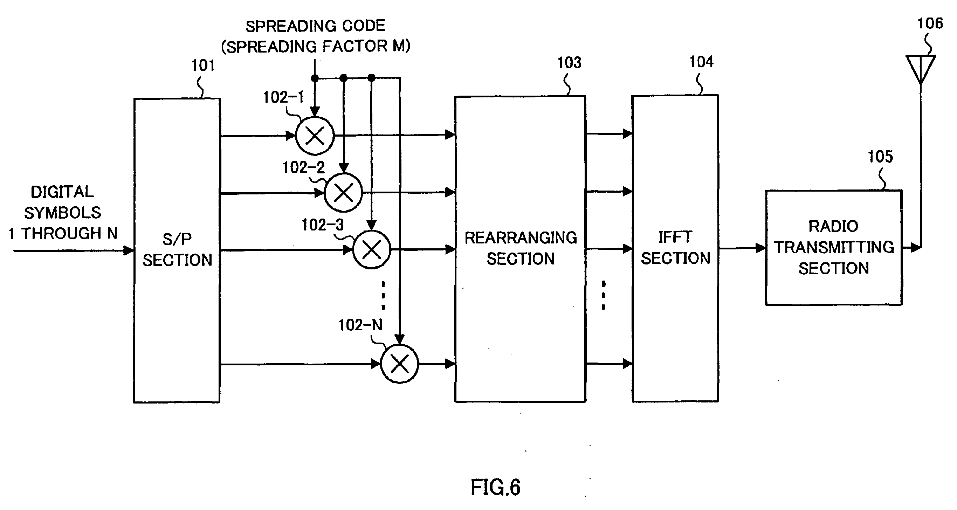

FIG.6 is a block diagram showing the configuration of the transmitting side in a radio communication apparatus according to Embodiment 1 of the present invention. The transmitting side radio communication apparatus shown in FIG.6 comprises a serial/parallel conversion section (S/P section) 101, time domain spreaders 102-1 through 102-N, rearranging section 103, inverse fast Fourier transform section (IFFT section) 104, radio transmitting section 105, and antenna 106.

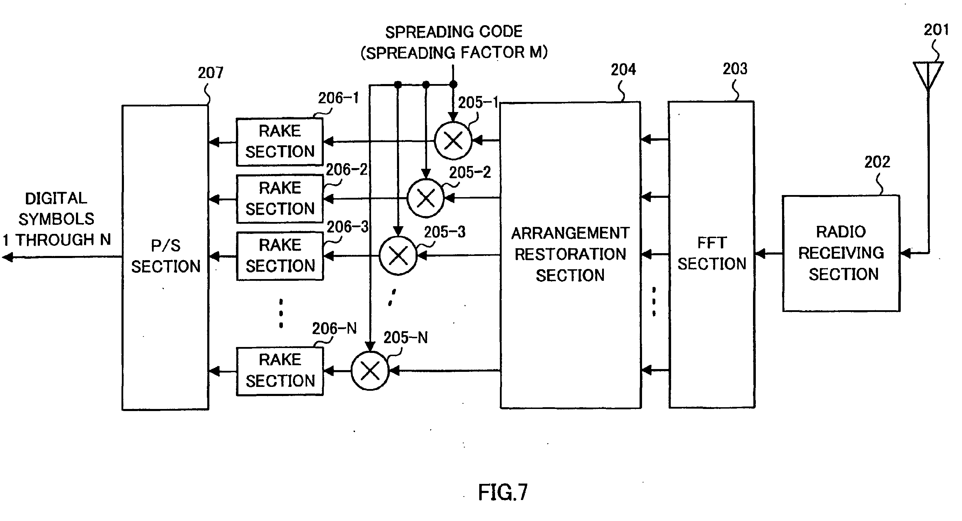

FIG.7 is a block diagram showing the configuration of the receiving side in a radio communication apparatus according to Embodiment 1 of the present invention. The receiving side radio communication apparatus shown in FIG.7 comprises an antenna 201, radio receiving section 202, Fourier transform section (FFT section) 203, arrangement restoration section 204, time domain despreaders 205-1 through 205-N, RAKE sections 206-1 through 206-N, and parallel/serial conversion section (P/S section) 207.

The following description refers to a case where N digital symbols are transmitted in parallel. Therefore, the radio communication apparatus shown in FIG.6 is provided with N time domain spreaders, and the radio communication apparatus shown in FIG.7 is provided with N time domain despreaders and RAKE sections.

First, in the transmitting side radio communication apparatus shown in FIG.6, N digital symbols 1 through N (serial data stream) shown in FIG.1 are converted to parallel data streams by the S/P section 101, and each of these is input to the corresponding time domain spreader. That is, digital symbol 1 is input to time domain spreader 102-1, digital symbol 2 is input to time domain spreader 102-2, and so on through to digital symbol N which is input to time domain spreader 102-N.

In time domain spreaders 102-1 through 102-N, digital symbols 1 through N are spread by means of a spreading code with spreading factor M. That is, digital symbols 1 through N are spread to M chips on the time axis. More specifically, digital symbol 1 is spread to t0 through tM time chips by time domain spreader 102-1, digital symbol 2 is spread to t0 through tM time chips by time domain spreader 102-2, and so on through to digital symbol N which is spread to t0 through tM time chips by time domain spreader 102-N. The post-spreading data of M chips is input to the rearranging section 103. Thus, chip arrangement data is stored in the rearranging section 103 as shown in FIG.2. That is, data of N symbols is stored in the frequency axis direction, and data of M chips is stored in the time axis direction.

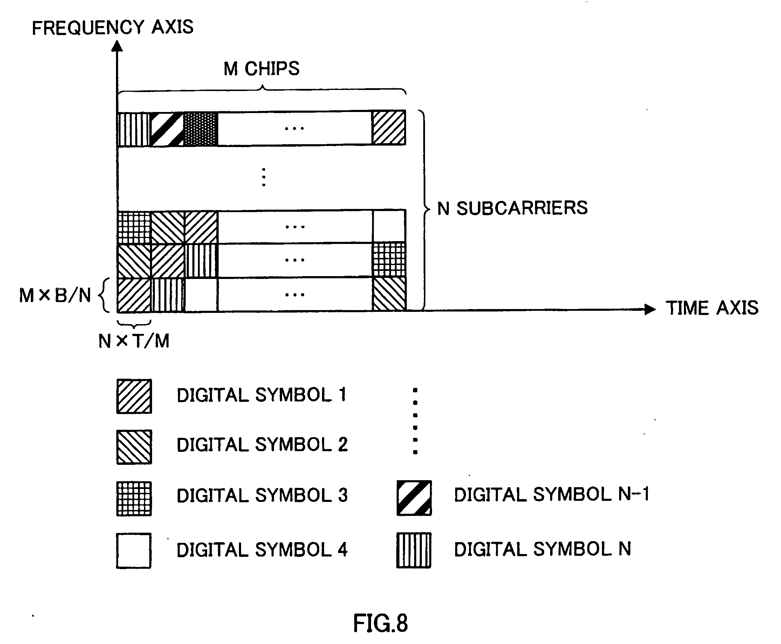

In the rearranging section 103, each post-spreading chip undergoes rearrangement by being shifted step-wise in the carrier frequency upward or downward direction on the frequency axis. Here, digital symbol 1 will be considered, taking the case where a shift is made in the carrier frequency upward direction. That is, chips 1 through M of digital symbol 1 spread in the time axis direction are shifted one step at a time in the carrier frequency upward direction as shown in FIG.8. This kind of shift processing is carried out on chips 1 through M of digital symbols 1 through N.

After rearrangement, chips are input sequentially to the IFFT section 104 with N in parallel, and undergo IFFT processing. As a result of performing IFFT processing after rearrangement has been performed in this way, first, OFDM symbols are generated with chip 1 of digital symbol 1 assigned to subcarrier 1, chip 1 of digital symbol 2 assigned to subcarrier 2, and so on through to chip 1 of digital symbol N which is assigned to subcarrier N, and then OFDM symbols are generated with chip 2 of digital symbol N assigned to subcarrier 1, chip 2 of digital symbol 1 assigned to subcarrier 2, and so on through to chip 2 of digital symbol N-1 which is assigned to subcarrier N. M such OFDM symbols are generated. That is, a particular digital symbol is arranged two-dimensionally, distributed both on the frequency axis and on the time axis.

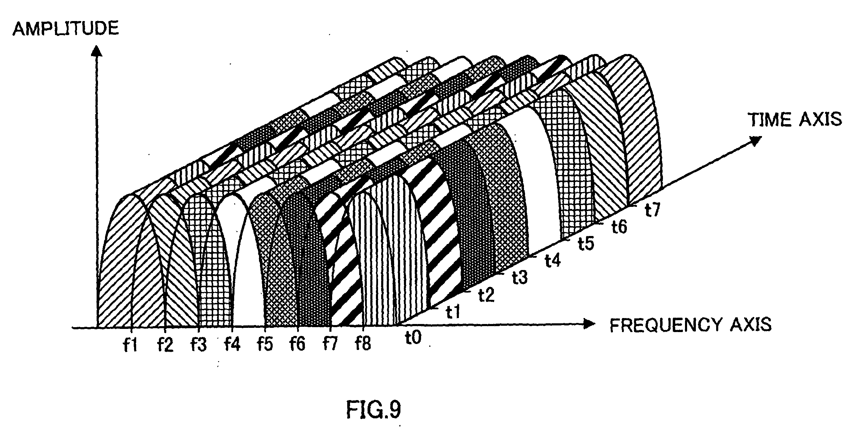

If, for example, number of digital symbols N = 8, and spreading factor M = 8, the OFDM symbol signal pattern generated by the IFFT section 104 is as shown in FIG.9. As shown in this diagram, in this embodiment, eight digital symbols differentiated by black-and-white shading are assigned sequentially, with the elapse of time, one chip at a time, each to a different one of subcarriers f1 through f8, and eight OFDM symbols are generated at t0 through t7. That is, the eight chips into which digital symbol 1 is spread are arranged respectively at time t0 of frequency f1, time t1 of frequency f2, time t2 of frequency f3, time t3 of frequency f4, time t4 of frequency f5, time t5 of frequency f6, time t6 of frequency f7, and time t7 of frequency f8.

Similarly, each chip of digital symbols 2 through 8, also, is arranged step-wise ahead of digital symbol 1. For example, the chips of digital symbol 2 are arranged at time t0 of frequency f2, time t1 of frequency f3, time t2 of frequency f4, time t3 of frequency f5, time t4 of frequency f6, time t5 of frequency f7, and time t6 of frequency f8.

As shown in FIG.8, one chip uses a time width of N×T/M and a frequency band width of M×B/N. That is, the interval between subcarriers in OFDM symbol shown in FIG.9 is M×B/N. Therefore, the area occupied by each digital symbol in the time-frequency domain is M×T×B, M times the area occupied by one digital symbol prior to modulation processing.

M OFDM symbols generated by the IFFT section 104 are input sequentially to the radio transmitting section 105, and after undergoing predetermined radio processing such as up-conversion, are transmitted from the antenna 106.

In the receiving side radio communication apparatus shown in FIG.7, predetermined radio processing such as down-conversion is carried out by the radio receiving section 202 on OFDM symbols received via the antenna 201. After undergoing the predetermined radio processing, OFDM symbols are input to the FFT section 203. Signals of digital symbols 1 through N transmitted by means of subcarriers 1 through N are then extracted by having FFT processing performed on the OFDM symbols by the FFT section 203. Similar processing is performed for M OFDM symbols received sequentially, and the resulting signals are input to the arrangement restoration section 204.

The arrangement restoration section 204 performs rearrangement that is the reverse of the rearrangement performed by the rearranging section 103 in the transmitting side radio communication apparatus. By this means, the arrangement of chips is restored to what it was prior to rearrangement by the rearranging section 103. That is, the arrangement of chips is restored to the arrangement shown in FIG.2. After their arrangement has been restored, the chips are input, N in parallel, to time domain despreaders 205-1 through 205-N and despread. After despreading, the data streams are input to RAKE sections 206-1 through 206-N, respectively.

RAKE sections 206-1 through 206-N perform RAKE combination processing that gathers together and combines delay path components along the time axis . That is, RAKE combination for digital symbol 1 is performed by RAKE section 206-1, RAKE combination for digital symbol 2 is performed by RAKE section 206-2, and so on through to RAKE combination for digital symbol N performed by RAKE section 206-N. After RAKE combination, digital symbols are input to the P/S section 207.

In the P/S section 207, digital symbols 1 through N that were input in parallel from RAKE sections 206-1 through 206-N are converted to a serial data stream and output. By this means, RAKE-combined digital symbols 1 through N are obtained sequentially.

Thus, in this embodiment, on the transmitting side, data (digital symbols) assigned to a plurality of subcarriers of different frequencies by means of S/P conversion are spread in the time elapse direction, and post-spreading chips are shifted step-wise in the carrier frequency upward or downward direction on the frequency axis, changing the arrangement, after which OFDM symbols are generated by IFFT processing. Also, on the receiving side, data that has undergone FFT processing is restored to its arrangement prior to being rearranged on the transmitting side, and this restored data is despread in the time elapse direction.

By this means, each item of data after despreading includes a plurality of components with different times and different frequencies. Thus, since a plurality of components with different frequencies are included, a frequency diversity effect is obtained. And since, at the same time, a plurality of components with different times are included, multipath separation is possible at OFDM symbol precision, and consequently RAKE combination is possible, enabling multipath distortion to be reduced. That is to say, a path diversity effect is obtained. Also, it is possible to increase the level of code division multiplexing to enable orthogonality to be maintained when orthogonal codes are used in spreading processing. Moreover, the influence of variations in signal extraction timing in Fourier transform processing can be suppressed.

Furthermore, high-speed transmission power control is not necessary, and transmission power control precision and reflection time can be made less stringent. As a result, the precipitance of characteristic degradation when transmission power control is imperfect, which has heretofore been a problem, can be alleviated. Moreover, it is possible to mitigate increase of battery consumption in mobile station apparatus, increase of amplifier size, increase of interference with other cells, and so forth, resulting from an increase in transmission power due to transmission power control.

In this embodiment, a particular digital symbol is arranged two-dimensionally, distributed both on the frequency axis and on the time axis, by having each chip that has been spread on the time axis shifted step-wise in the carrier frequency upward or downward direction on the frequency axis. However, in this embodiment, the method of distribution on the frequency axis is not limited to this, and any distribution method may be used as long as it is a method of distribution on the frequency axis based on a predetermined rule.

### (Embodiment 2)

In this embodiment, a particular data item is arranged two-dimensionally, distributed both on the frequency axis and on the time axis, by spreading data in both the frequency domain and time domain-that is, by spreading data in both the frequency axis direction and time axis direction.

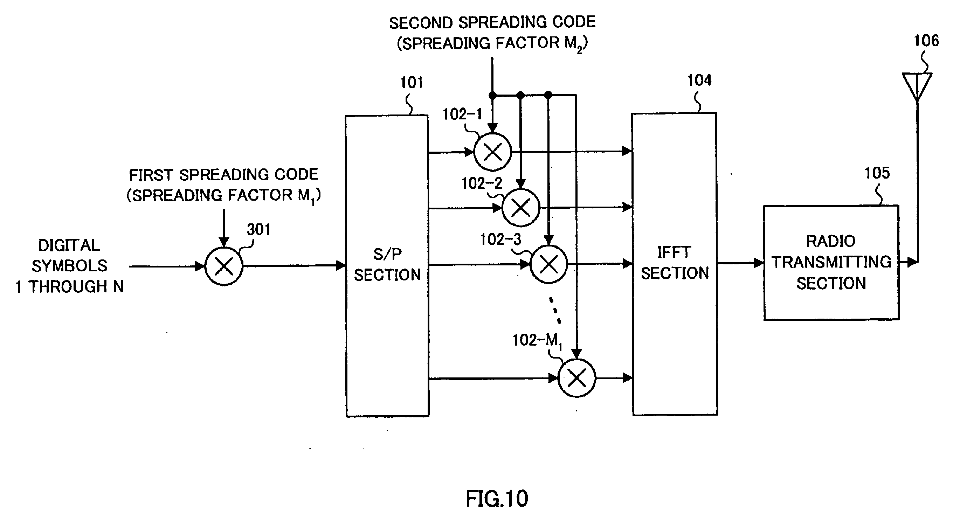

FIG. 10 is a block diagram showing the configuration of the transmitting side in a radio communication apparatus according to Embodiment 2 of the present invention. The transmitting side radio communication apparatus shown in FIG.10 comprises a frequency domain spreader 301, S/P section 101, time domain spreaders 102-1 through 102-M₁, IFFT section 104, radio transmitting section 105, and antenna 106. Parts in FIG.10 identical to those in Embodiment 1 (FIG.6) are assigned the same codes as in FIG.6 and their detailed explanations are omitted.

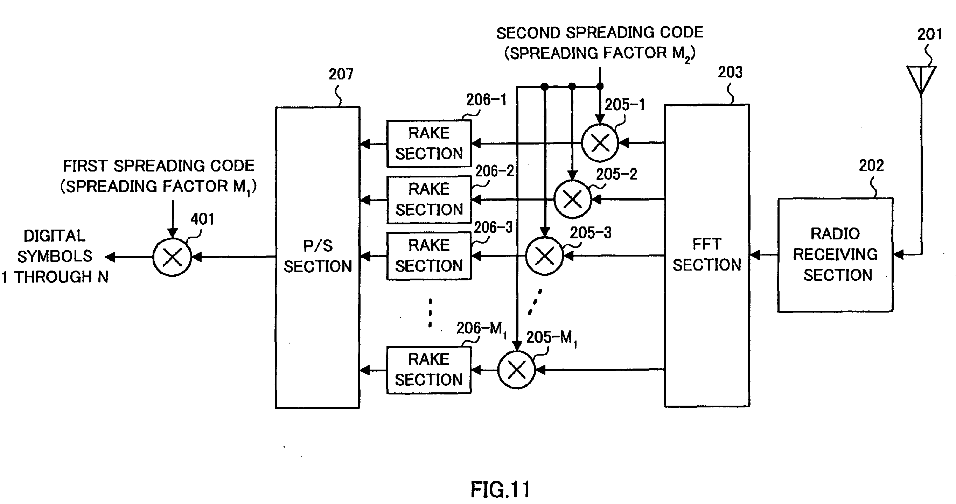

FIG.11 is a block diagram showing the configuration of the receiving side in a radio communication apparatus according to Embodiment 2 of the present invention. The receiving side radio communication apparatus shown in FIG.11 comprises an antenna 201, radio receiving section 202, FFT section 203, time domain despreaders 205-1 through 205-M₁, RAKE sections 206-1 through 206-M₁, P/S section 207, and frequency domain despreader 401. Parts in FIG.11 identical to those in Embodiment 1 (FIG.7) are assigned the same codes as in FIG.7 and their detailed explanations are omitted.

The following description refers to a case where 1 through N digital symbols are spread on the frequency axis with spreading factor M₁. Therefore, the radio communication apparatus shown in FIG.10 is provided with M₁ time domain spreaders, and the radio communication apparatus shown in FIG. 11 is provided with M₁ time domain despreaders and RAKE sections.

First, in the transmitting side radio communication apparatus shown in FIG.10, N digital symbols 1 through N (serial data stream) shown in FIG.1 are spread by the frequency domain spreader 301 by means of a first spreading code with spreading factor M₁. The post-spreading data of M₁ chips is input to the S/P section 101. In the S/P section 101, data of M₁ chips input serially is converted to parallel data. By this processing, digital symbols 1 through N are spread to M₁ chips on the frequency axis, and as a result, chips 1 through M₁ are assigned to subcarriers 1 through M₁, respectively, each of a different frequency.

The M₁ chips converted to parallel form by the S/P section 101 are input to the respective corresponding time domain spreaders. That is, the first chip of each digital symbol is input to time domain spreader 102-1, the second chip is input to time domain spreader 102-2, and so on through to the M₁'th chip which is input to time domain spreader 102-M₁.

In time domain spreaders 102-1 through 102-M₁, chips 1 through M₁ are further spread by means of a second spreading code with spreading factor M₂. That is, the digital symbols spread to M₁ chips on the frequency axis are further spread to M₂ chips on the time axis. In other words, each digital symbol is spread by M₁×M₂ times, that is, M₁ times in the frequency domain and M₂ times in the time domain. By this means, a particular digital symbol is arranged two-dimensionally, distributed both on the frequency axis and on the time axis. Chips spread by time domain spreaders 102-1 through 102-M₁ are input sequentially to the IFFT section 104, M₁ in parallel, and undergo IFFT processing. As a result, N×M₂ OFDM symbols are generated by the IFFT section 104.

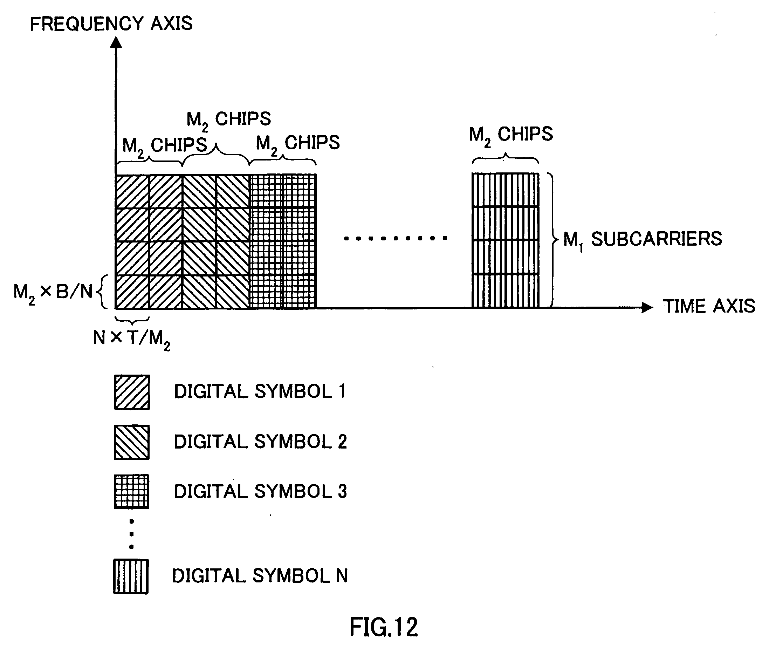

For example, if frequency domain spreading factor M₁ = 4 and time domain spreading factor M₂ = 2, the chip arrangement on the frequency axis and time axis is as shown in FIG.12. That is, digital symbols 1 through N are arranged sequentially for four chips in the frequency axis direction and for two chips in the time axis direction.

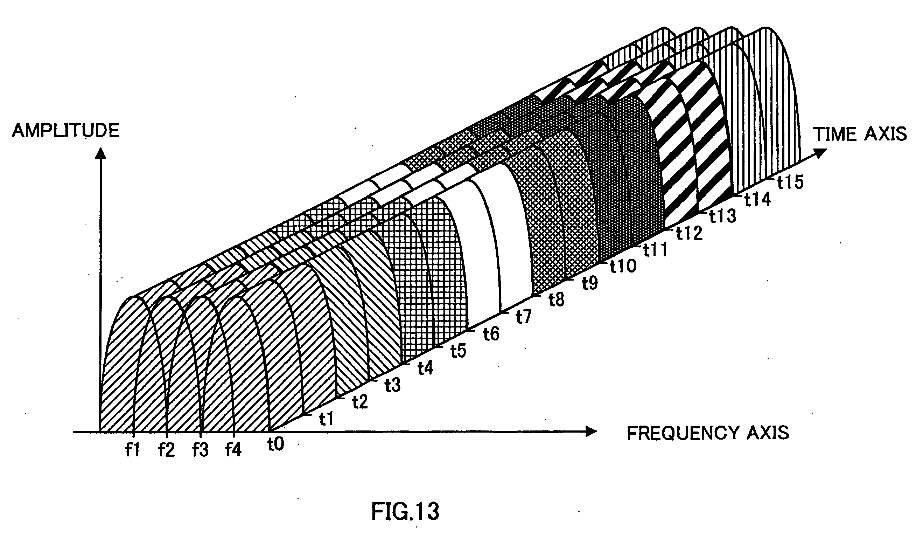

Also, the OFDM symbol signal pattern generated by the IFFT section 104 is as shown in FIG.13. That is, the eight chips into which digital symbol 1 is spread are arranged respectively at time t0 of frequency f1, time t0 of frequency f2, time t0 of frequency f3, time t0 of frequency f4, time t1 of frequency f1, time t1 of frequency f2, time t1 of frequency f3, and time t1 of frequency f4. Similarly, each chip of digital symbols 2 through 8, also, is arranged after digital symbol 1. For example, the chips of digital symbol 2 are arranged at time t2 of frequency f1, time t2 of frequency f2, time t2 of frequency f3, time t2 of frequency f4, time t3 of frequency f1, time t3 of frequency f2, time t3 of frequency f3, and time t3 of frequency f4.

As shown in FIG.12, one chip uses a time width of N×T/M₂ and a frequency band width of M₂×B/N. That is, the interval between subcarriers in OFDM symbol shown in FIG. 13 is M₂×B/N. Therefore, the area occupied by each digital symbol in the time-frequency domain is M₁×M₂×T×B, M₁×M₂ times the area occupied by one digital symbol prior to modulation processing. Also, if M₁×M₂=M, the spreading factor in this embodiment is M times, as in Embodiment 1.

In the receiving side radio communication apparatus shown in FIG.11, after undergoing radio processing, OFDM symbols are input to the FFT section 203. Signals transmitted by means of subcarriers 1 through M₁ are then extracted by having FFT processing performed on the OFDM symbols by the FFT section 203. Similar processing is performed for N×M₂ OFDM symbols received sequentially, and the resulting signals are input to time domain despreaders 205-1 through 205-M₁.

In time domain despreaders 205-1 through 205-M₁, despreading processing is carried out on the input data by means of the same second spreading code (spreading factor M₂) used by time domain spreaders 102-1 through 102-M₁ in the transmitting side radio communication apparatus. That is, despreading processing is performed in the time domain. After despreading, the data is RAKE-combined by RAKE sections 206-1 through 206-M₁, and then converted to a serial data stream by the P/S section 207 and input to the frequency domain despreader 401.

In the frequency domain despreader 401, despreading processing is carried out on the input data by means of the same first spreading code (spreading factor M₁) used by the frequency domain spreader 301 in the transmitting side radio communication apparatus. By this means, RAKE-combined digital symbols 1 through N are obtained sequentially.

In this embodiment, it is also possible to perform parallel transmission of X digital symbols. In this case, the number of time domain spreaders required in the transmitting side radio communication apparatus, and the number of time domain despreaders and RAKE sections required in the receiving side radio communication apparatus, is X×M₁. That is, X×M₁ subcarriers are included in one OFDM symbol.

For example, if two digital symbols are transmitted in parallel, the S/P section in the transmitting side radio communication apparatus outputs in parallel chips of digital symbol 1 and digital symbol 2 spread M₁ times respectively. That is to say, 2×M₁ chips are output in parallel. As a result, digital symbol 1 and digital symbol 2 are simultaneously spread to M₁ chips each on the frequency axis. Then each chip is further spread to M₂ chips on the time axis by a time domain spreader 102.

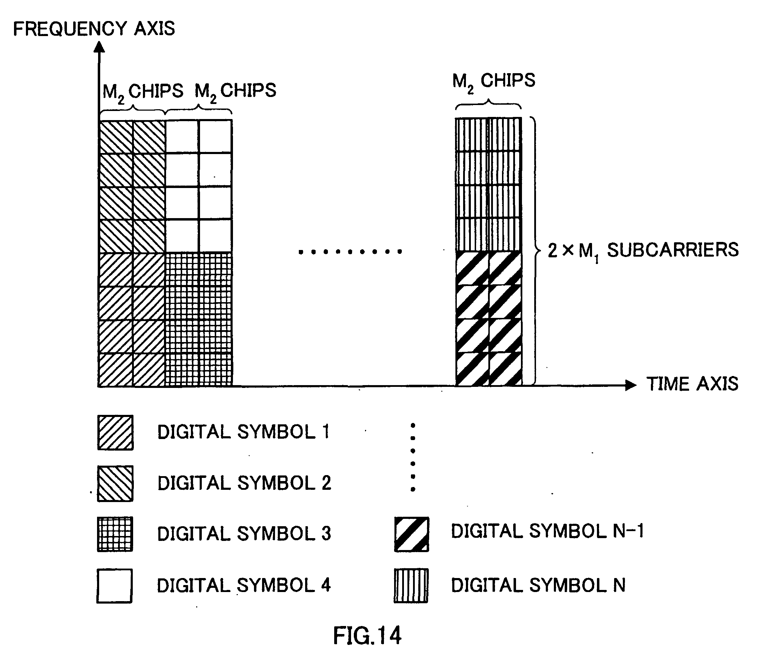

Therefore, if, for example, frequency domain spreading factor M₁ = 4 and time domain spreading factor M₂ = 2, the chip arrangement on the frequency axis and time axis is as shown in FIG.14. That is, digital symbols spread to 4×2 chips are arranged in parallel two digital symbols at a time on the frequency axis.

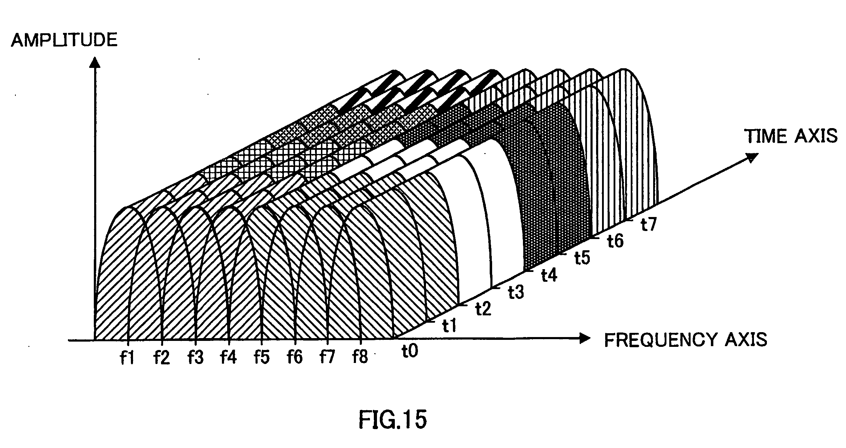

Also, the OFDM symbol signal pattern generated by the IFFT section 104 is as shown in FIG.15. That is, the eight chips into which digital symbol 1 is spread are arranged respectively at time t0 of frequency f1, time t0 of frequency f2, time t0 of frequency f3, time t0 of frequency f4, time t1 of frequency f5, time t1 of frequency f6, time t1 of frequency f7, and time t1 of frequency f8. And the chips of digital symbol 2 are arranged at time t0 of frequency f5, time t0 of frequency f6, time t0 of frequency f7, time t0 of frequency f8, time t1 of frequency f5, time t1 of frequency f6, time t1 of frequency f7, and time t1 of frequency f8.

Thus, in this embodiment, on the transmitting side, data (digital symbols) are spread in both the frequency domain and time domain, after which OFDM symbols are generated by IFFT processing. Also, on the receiving side, despreading is performed in both the frequency domain and time domain corresponding to spreading processing on the transmitting side. By this means, the same kind of effect is obtained as with Embodiment 1.

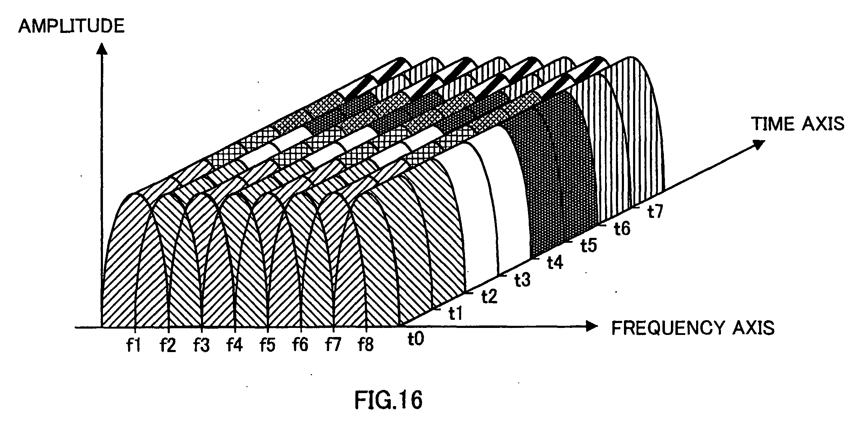

Also, in this embodiment, it is possible to perform spreading in the time axis direction individually for each of frequencies f1 through f8, or to form groups of close frequencies and perform this spreading individually for each group. For instance, by grouping f1, f3, f5, and f7 into one group, and f2, f4, f6, and f8 into one group, and performing spreading in the time axis direction for each group, the same digital symbol occurs twice in succession in the time axis direction, and occurs in alternating fashion in the frequency axis direction, as shown in FIG. 16, for example. In this way, it is possible to maintain the effect of reduced inter-code interference when using orthogonal codes for spreading. Moreover, the greater the separation of the frequencies of the carriers on which the same digital symbol is arranged, the higher is the frequency diversity effect, and the nearer frequencies are made to approach, the greater is the effect of reduced inter-code interference.

In this embodiment, time domain spreading processing is performed after frequency domain spreading processing. However, this order may be reversed. That is to say, a particular digital symbol can still be arranged two-dimensionally, distributed on the frequency axis and time axis, if frequency domain spreading processing is performed after time domain spreading processing.

### (Embodiment 3)

In this embodiment, after data has been spread in both the frequency domain and time domain, post-spreading chips are further shifted step-wise in the carrier frequency upward or downward direction on the frequency axis, changing the arrangement.

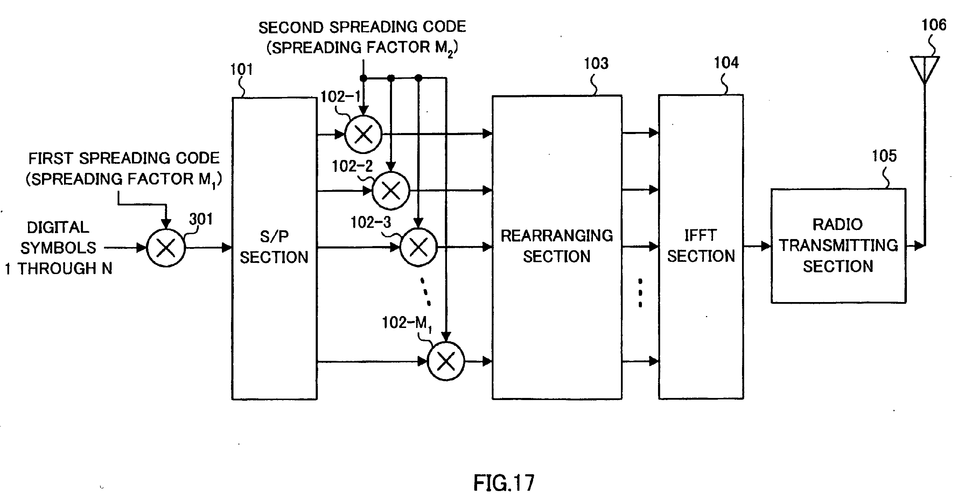

FIG.17 is a block diagram showing the configuration of the transmitting side in a radio communication apparatus according to Embodiment 3 of the present invention. The transmitting side radio communication apparatus shown in FIG.17 is configured with the further provision of a rearranging section 103 as described in Embodiment 1 between time domain spreaders 102-1 through 102-M₁ and IFFT section 104 of a radio communication apparatus according to Embodiment 2 (FIG.10). Parts in FIG.17 identical to those in Embodiment 1 (FIG.6) or Embodiment 2 (FIG.10) are assigned the same codes as in FIG.6 or FIG.10 and their detailed explanations are omitted.

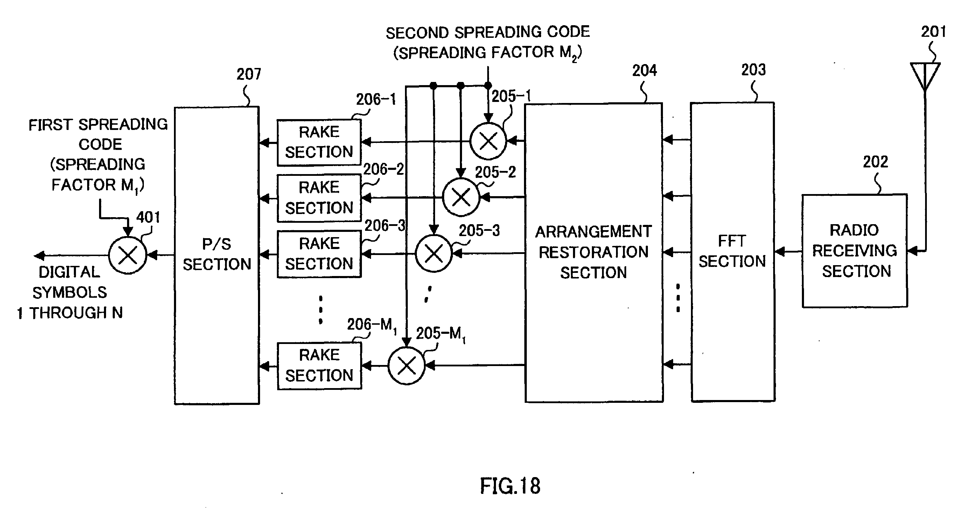

FIG.18 is a block diagram showing the configuration of the receiving side in a radio communication apparatus according to Embodiment 3 of the present invention. The receiving side radio communication apparatus shown in FIG.18 is configured with the further provision of an arrangement restoration section 204 as described in Embodiment 1 between the FFT section 203 and time domain despreaders 205-1 through 205-M₁ of a radio communication apparatus according to Embodiment 2 (FIG.11). Parts in FIG.18 identical to those in Embodiment 1 (FIG.7) or Embodiment 2 (FIG.11) are assigned the same codes as in FIG.7 or FIG.11 and their detailed explanations are omitted.

In the transmitting side radio communication apparatus shown in FIG.17, digital symbols are spread in both the frequency domain and time domain, as described in Embodiment 2, and further, chips are rearranged by the rearranging section 103 as described in Embodiment 1.

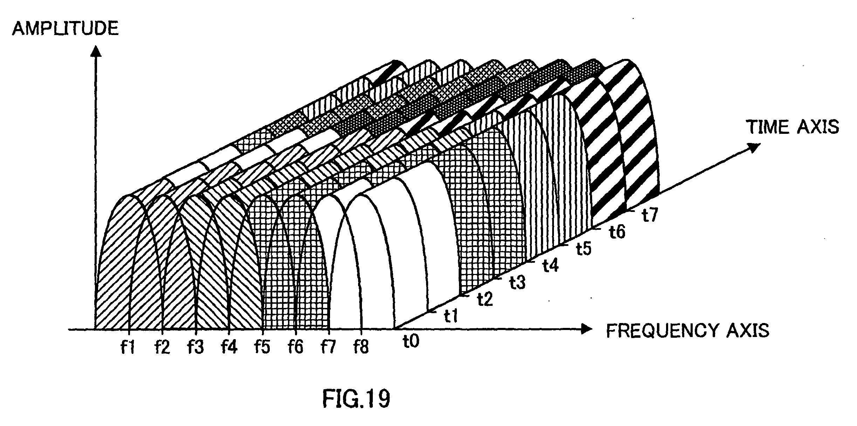

For example, by performing spreading processing in both the frequency domain and time domain with frequency domain spreading factor M₁ = 2 and time domain spreading factor M₂ = 4, and then performing shift processing in the frequency axis direction (upward direction) by means of the rearranging section 103, the resulting OFDM symbol signal pattern is as shown in FIG.19. Here, a case is shown where four digital symbols are transmitted in parallel.

Also, in the receiving side radio communication apparatus shown in FIG.18, data that has undergone a Fourier transform is restored by the arrangement restoration section 204 to its arrangement prior to being rearranged by the rearranging section 103, and is then despread in both the frequency domain and time domain.

Thus, in this embodiment, after data has been spread in both the frequency domain and time domain, post-spreading chips are further rearranged on the frequency axis. By this means, the frequency diversity effect can be increased to a greater extent than in Embodiment 1 or Embodiment 2.

### (Embodiment 4)

In this embodiment, when a particular data item is arranged two-dimensionally, distributed on the frequency axis and time axis, post-spreading chips are arranged irregularly both on the frequency axis and on the time axis.

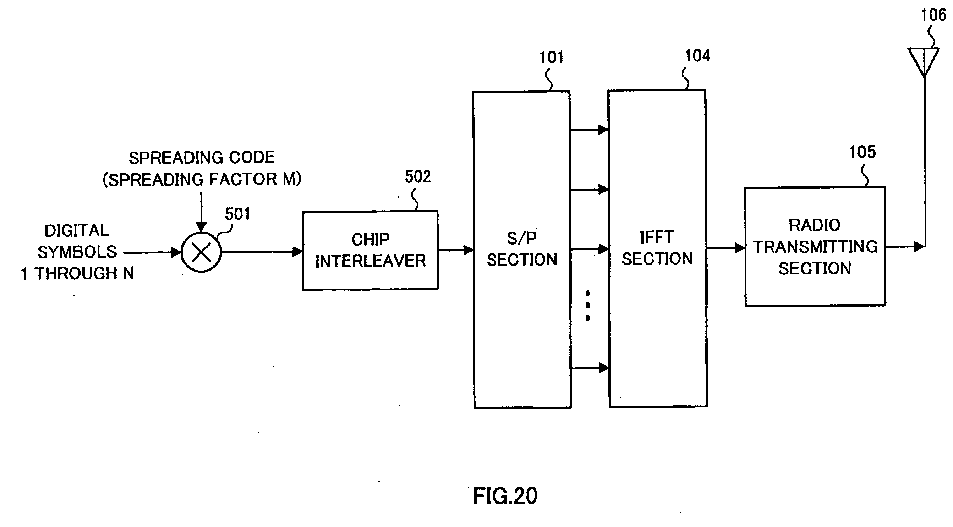

FIG.20 is a block diagram showing the configuration of the transmitting side in a radio communication apparatus according to Embodiment 4 of the present invention. The transmitting side radio communication apparatus shown in FIG.20 comprises a spreader 501, chip interleaver 502, S/P section 101, IFFT section 104, radio transmitting section 105, and antenna 106. Parts in FIG.20 identical to those in Embodiment 1 (FIG.6) are assigned the same codes as in FIG.6 and their detailed explanations are omitted.

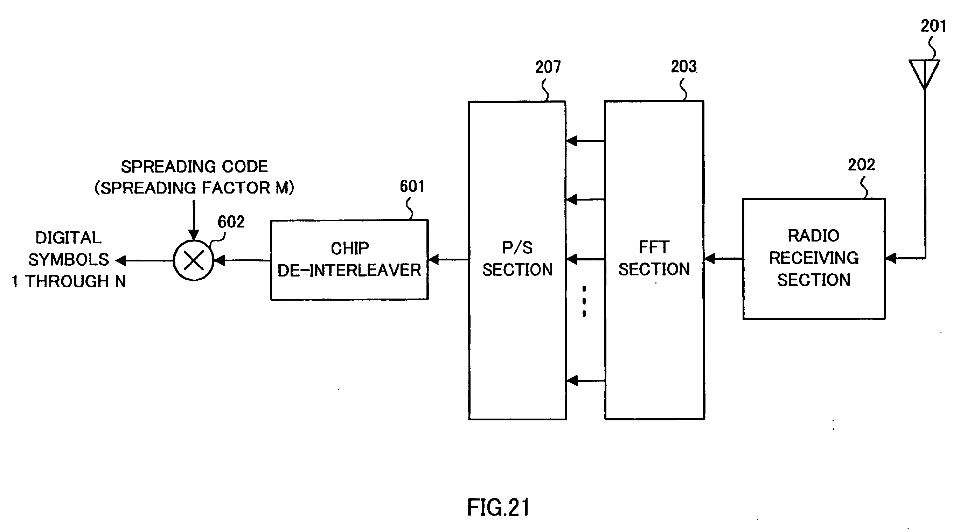

FIG.21 is a block diagram showing the configuration of the receiving side in a radio communication apparatus according to Embodiment 4 of the present invention. The receiving side radio communication apparatus shown in FIG.21 comprises an antenna 201, radio receiving section 202, FFT section 203, P/S section 207, chip de-interleaver 601, and despreader 602. Parts in FIG.21 identical to those in Embodiment 1 (FIG.7) are assigned the same codes as in FIG.7 and their detailed explanations are omitted.

In the transmitting side radio communication apparatus shown in FIG.20, N digital symbols 1 through N (serial data stream) are spread by the spreader 501 by means of a spreading code with spreading factor M. Following spreading, chips are input sequentially to the chip interleaver 502. By this means, N×M chips are stored in the chip interleaver 502.

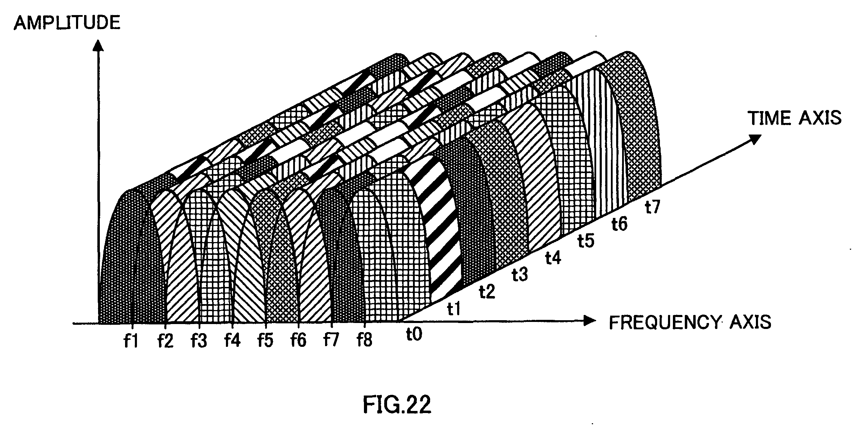

In the chip interleaver 502, chip interleaving (rearrangement of the chip series) with a predetermined pattern is performed so that chips are arranged irregularly both on the frequency axis and on the time axis, as shown in FIG.22 for example. By this means, M chips of a particular digital symbol are arranged irregularly both on the frequency axis and on the time axis. After chip interleaving processing, chips are input to the S/P section and converted to parallel form.

In the receiving side radio communication apparatus shown in FIG.21, following P/S conversion chips are input to the chip de-interleaver 601. In the chip de-interleaver 601, rearrangement is performed that is the reverse of the rearrangement carried out by the chip interleaver 502 on the transmitting side. As a result of this chip de-interleaving, the chip series is restored to what it was prior to rearrangement by the chip interleaver 502. Following chip de-interleaving, chips are input to the despreader 602, and are despread using the same spreading code (spreading factor M) as was used by the spreader 501 on the transmitting side.

Thus, in this embodiment, chip interleaving is carried out whereby, following spreading, chips are arranged irregularly both on the frequency axis and on the time axis. By this means, both the frequency diversity effect and path diversity effect can be increased to a greater extent than in Embodiment 1 or Embodiment 2.

Also, by changing the interleaving pattern for each sector, it is possible to reduce interference that occurs between adjacent sectors. Moreover, by changing the interleaving pattern for each communicating partner, the SIR (Signal to Interference Ratio) is averaged and errors arising in a transmission path can be further dispersed, enabling the effect of error correction to be increased.

### (Embodiment 5)

In this embodiment, OFDM symbols are generated without assigning a chip component to a subcarrier with poor channel quality in an FDD (Frequency Division Duplex) communication system.

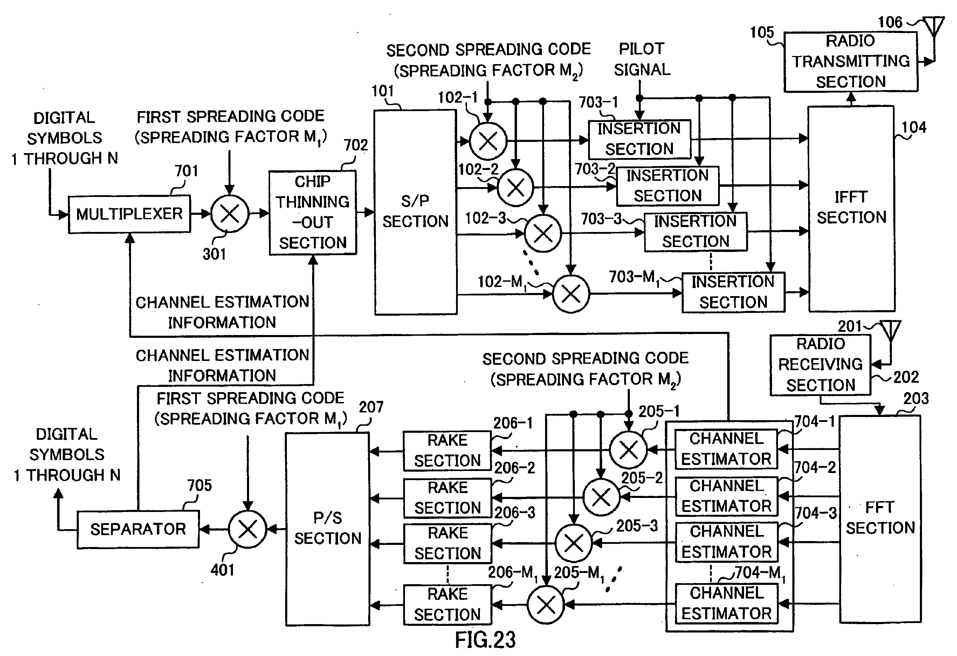

FIG.23 is a block diagram showing the configuration of a radio communication apparatus according to Embodiment 5 of the present invention. Parts in FIG.23 identical to those in Embodiment 2 (FIG.10 and FIG.11) are assigned the same codes as in FIG.10 or FIG.11 and their detailed explanations are omitted.

The radio communication apparatus shown in FIG.23 is a radio communication apparatus used in an FDD communication system. A communicating partner radio communication apparatus that communicates with this radio communication apparatus also has the same configuration.

In the radio communication apparatus shown in FIG.23, the transmitting side comprises, in addition to the configuration shown in FIG.10, a multiplexer 701, chip thinning-out section 702, and insertion sections 703-1 through 703-M₁, and the receiving side comprises, in addition to the configuration shown in FIG.11, channel estimators 704-1 through 704-M₁ and a separator 705.

With this configuration, OFDM symbols from a communicating partner received at the receiving side undergo FFT processing by the FFT section 203, followed by input to channel estimators 704-1 through 704-M₁ for each subcarrier component. In channel estimators 704-1 through 704-M₁, the channel quality of each subcarrier is estimated using a pilot signal inserted in each subcarrier. Pilot signals for performing channel estimation are pilot signals of fixed power inserted by insertion sections 703-1 through 703-M₁ on the communicating partner's transmitting side.

Since, with the FDD method, signals are transmitted and received using different frequency bands on the transmit channel and receive channel, it is not possible for an apparatus to ascertain how a signal it has transmitted has arrived at the communicating partner. Neither is it possible for the communicating partner to ascertain how a signal it has transmitted has arrived at the apparatus. It is therefore necessary for channel estimation information to be provided by each communicating partner to the other.

A value (for example, amplitude fluctuation or phase fluctuation) indicating the channel quality of the receive channel estimated by channel estimators 704-1 through 704-M₁ is input to the multiplexer 701. In the multiplexer 701, channel estimation information is multiplexed on digital symbols. By this means, channel estimation information for a signal received by this apparatus is transmitted to the communicating partner, and the communicating partner can be informed the channel quality of the signal it transmitted (i.e., the propagation path conditions).

On the receiving side, channel estimation information for each subcarrier transmitted from a communicating partner is separated by the separator 705, and input to the chip thinning-out section 702. In the chip thinning-out section 702, the chip components of subcarriers with poor channel quality are thinned out in accordance with this channel estimation information for the transmit channel. That is, of the chips output from frequency domain spreader 301, chip components assigned to subcarriers whose amplitude fluctuation or phase fluctuation is equal to or greater than a predetermined threshold value are thinned out. Therefore, a signal is not transmitted on a subcarrier with poor channel quality.

Thus, in this embodiment, OFDM symbols are generated without assigning a chip component to a subcarrier with poor channel quality in an FDD communication system. That is to say, a signal is not transmitted on a subcarrier with poor channel quality. By this means, interference with other users can be reduced when a plurality of users' signals are code division multiplexed on each subcarrier.

Also, in this embodiment, although transmission characteristics are somewhat degraded by the thinning-out of chip components, this can be adequately compensated for by means of error correcting codes, etc.

### (Embodiment 6)

In this embodiment, OFDM symbols are generated without assigning a chip component to a subcarrier with poor channel quality in a TDD (Time Division Duplex) communication system.

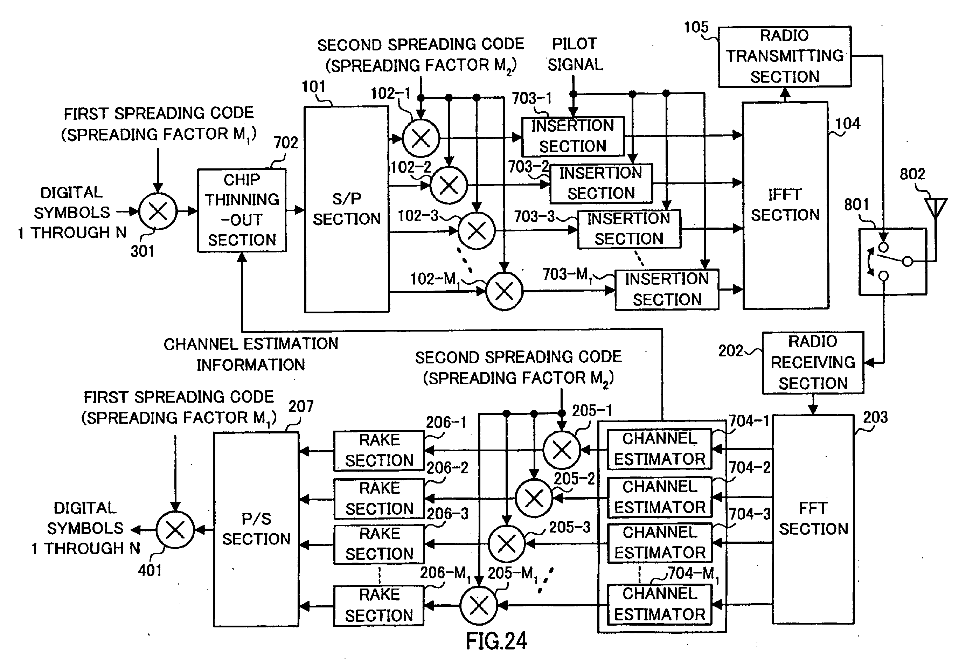

FIG.24 is a block diagram showing the configuration of a radio communication apparatus according to Embodiment 6 of the present invention. Parts in FIG.24 identical to those in Embodiment 5 (FIG.23) are assigned the same codes as in FIG.23 and their detailed explanations are omitted.

The radio communication apparatus shown in FIG.24 is a radio communication apparatus used in a TDD communication system. A communicating party radio communication apparatus that communicates with this radio communication apparatus also has the same configuration. By means of switching control by a switch 801, antenna 802 and radio transmitting section 105 are connected at the time of time-slot transmission, and antenna 802 and radio receiving section 202 are connected at the time of time-slot reception.

With the TDD method, unlike the FDD method, signals are transmitted and received using the same frequency band on the transmit channel and receive channel. Consequently, if the time slot interval is sufficiently short and channel conditions scarcely vary in adjacent transmission and reception times, channel quality estimated on the receiving side can be used as transmitting side channel quality.

A value (for example, amplitude fluctuation or phase fluctuation) indicating the channel quality estimated by channel estimators 704-1 through 704-M₁ is input to a chip thinning-out section 702 as channel estimation information. In the chip thinning-out section 702, the chip components of subcarriers with poor channel quality are thinned out using this channel estimation information for the receive channel as channel estimation information for the transmit channel. That is, of the chips output from frequency domain spreader 301, chip components assigned to subcarriers whose amplitude fluctuation or phase fluctuation is equal to or greater than a predetermined threshold value are thinned out. Therefore, a signal is not transmitted on a subcarrier with poor channel quality.

By this means, the same effect as in Embodiment 5 can be obtained in a TDD communication system. That is to say, interference with other users can be reduced when a plurality of users' signals are code division multiplexed on each subcarrier. Also, as in Embodiment 5, although transmission characteristics are somewhat degraded by the thinning-out of chip components, this can be adequately compensated for by means of error correcting codes, etc.

Embodiments 5 and 6 can also be implemented by being combined with any one of Embodiments 1 through 4.

Also, in Embodiments 1 through 6, descriptions have been given taking the OFDM modulation method as an example of a multicarrier modulation method, but the present invention can be implemented with any multicarrier modulation method.

As described above, according to the present invention it is possible to obtain both a frequency diversity effect and a path diversity effect in radio communications in which a multicarrier modulation method and CDMA method are combined, enabling transmission characteristics to be improved compared with heretofore.

This application is based on Japanese Patent Application No.2000-076904 filed on March 17, 2000, and Japanese Patent Application No.2000-308884 filed on December 10, 2000, entire content of which is expressly incorporated by reference herein.

### Industrial Applicability

The present invention is applicable to a communication terminal apparatus and base station apparatus used in a digital communication system.

## Claims

1. A radio communication apparatus that performs communications by combining a multicarrier modulation method and a CDMA method, said radio communication apparatus comprising:
an arranger for dividing a particular data item into chip units and arranging said chip units two-dimensionally both on the frequency axis and on the time axis; and
a transmitter for transmitting a multicarrier signal in which each of the divided data is assigned to carrier corresponding to the each of the divided data.

2. The radio communication apparatus according to claim 1, wherein said arranger spreads data on the time axis, and then shifts each post-spreading chip step-wise in the carrier frequency upward or downward direction on the frequency axis, changing the arrangement.

3. The radio communication apparatus according to claim 1, wherein said arranger spreads data both on the time axis and on the frequency axis.

4. The radio communication apparatus according to claim 1, wherein said arranger spreads data both on the time axis and on the frequency axis, and then shifts each post-spreading chip step-wise in the carrier frequency upward or downward direction on the frequency axis, changing the arrangement.

5. The radio communication apparatus according to claim 1, wherein said arranger spreads data, and then performs chip rearrangement for arranging each post-spreading chip irregularly on the frequency axis and on the time axis.

6. The radio communication apparatus according to claim 1, further comprising a thinning-outer for thinning out post-division data to be assigned to a carrier whose channel quality is poor.

7. A radio communication apparatus that performs communications by combining a multicarrier modulation method and a CDMA method, said radio communication apparatus comprising:
a receiver for receiving a multicarrier signal; and
a restorer for restoring data, that has been divided into chip units and arranged two-dimensionally both on the frequency axis and on the time axis by a communicating partner, to a pre-division state .

8. The radio communication apparatus according to claim 7, wherein said restorer restores each chip to the arrangement that existed prior to a change of arrangement by a communicating partner, and then despreads data for which the arrangement of each chip has been restored on the time axis.

9. The radio communication apparatus according to claim 7, wherein said restorer despreads data both on the time axis and on the frequency axis.

10. The radio communication apparatus according to claim 7, wherein said restorer restores each chip to the arrangement that existed prior to a change of arrangement by a communicating partner, and then despreads data for which the arrangement of each chip has been restored both on the time axis and on the frequency axis.

11. The radio communication apparatus according to claim 7, wherein said restorer restores each chip that has been arranged irregularly both on the frequency axis and on the time axis to the arrangement that existed prior to a change of arrangement by a communicating partner, and then despreads data for which the arrangement of each chip has been restored.

12. A communication terminal apparatus equipped with a radio communication apparatus that performs communications by combining a multicarrier modulation method and a CDMA method, said radio communication apparatus comprising:
an arranger for dividing a particular data item into chip units and arranging said chip units two-dimensionally both on the frequency axis and on the time axis; and
a transmitter for transmitting a multicarrier signal in which each of the divided data is assigned to carrier corresponding to the each of the divided data.

13. A communication terminal apparatus equipped with a radio communication apparatus that performs communications by combining a multicarrier modulation method and a CDMA method, said radio communication apparatus comprising:
a receiver for receiving a multicarrier signal; and
a restorer for restoring data, that has been divided into chip units and arranged two-dimensionally both on the frequency axis and on the time axis by a communicating partner, to a pre-division state.

14. A base station apparatus equipped with a radio communication apparatus that performs communications by combining a multicarrier modulation method and a CDMA method, said radio communication apparatus comprising:
an arranger for dividing a particular data item into chip units and arranging said chip units two-dimensionally both on the frequency axis and on the time axis; and
a transmitter for transmitting a multicarrier signal in which each of the divided data is assigned to carrier corresponding to the each of the divided data.

15. A base station apparatus equipped with a radio communication apparatus that performs communications by combining a multicarrier modulation method and a CDMA method, said radio communication apparatus comprising:
a receiver for receiving a multicarrier signal; and
a restorer for restoring data, that has been divided into chip units and arranged two-dimensionally both on the frequency axis and on the time axis by a communicating partner, to a pre-division state.

16. A radio communication method that combines a multicarrier modulation method and a CDMA method, comprising the steps of:
on the transmitting side, dividing a particular data item into chip units and arranging said chip units two-dimensionally both on the frequency axis and on the time axis, and then transmitting a multicarrier signal in which each of the divided data is assigned to carrier corresponding to the each of the divided data; and
on the receiving side, receiving the multicarrier signal and restoring data, that has been arranged two-dimensionally on the transmitting side, to a pre-division state.

17. The radio communication method according to claim 16, comprising the steps of:
on the transmitting side, spreading data on the time axis, and then shifting each post-spreading chip step-wise in the carrier frequency upward or downward direction on the frequency axis, changing the arrangement; and
on the receiving side, restoring each chip to the arrangement that existed prior to a change of arrangement on the transmitting side, and then despreading data for which the arrangement of each chip has been restored on the time axis.

18. The radio communication method according to claim 16, comprising the steps of:
on the transmitting side, spreading data both on the time axis and on the frequency axis; and
on the receiving side, despreading data both on the time axis and on the frequency axis.

19. The radio communication method according to claim 16, comprising the steps of:
on the transmitting side, spreading data both on the time axis and on the frequency axis, and then shifting each post-spreading chip step-wise in the carrier frequency upward or downward direction on the frequency axis, changing the arrangement; and
on the receiving side, restoring each chip to the arrangement that existed prior to a change of arrangement on the transmitting side, and then despreading data for which the arrangement of each chip has been restored both on the time axis and on the frequency axis.

20. The radio communication method according to claim 16, comprising the steps of:
on the transmitting side, spreading data, and then performing chip rearrangement for arranging each post-spreading chip irregularly both on the frequency axis and on the time axis; and
on the receiving side, restoring each chip to the arrangement that existed prior to rearrangement on the transmitting side, and then despreading data for which the arrangement of each chip has been restored.

21. The radio communication method according to claim 16, further comprising the step of, on the transmitting side, thinning out post-division data to be assigned to a carrier whose channel quality is poor.
